# EUROPEAN PATENT SPECIFICATION

(11) **EP 0 605 937 B1**
(45) Date of publication and mention of the grant of the patent: **11.06.1997**
(21) Application number: 93300069.7
(22) Date of filing: 06.01.1993
(51) Int. Cl.: C08L 55/02, C08L 25/12

(54) **Antistatic resin composition**
Antistatische Harzzusammensetzung
Composition de résine antistatique

(43) Date of publication of application: 13.07.1994
(73) Proprietor: DAISO CO., LTD., Osaka-shi Osaka-fu (JP)
(72) Inventor: Matoaba, Yasuo, Amagasaki-shi, Hyogo (JP); Shimizu, Yasumi, Kawanishi-shi, Hyogo (JP); Miura, Katsuhito, Amagasaki-shi, Hyogo (JP); Kitano, Sojiro, Osaka-shi, Osaka (JP); Sakashita, Takahiro, Osaka-shi, Osaka (JP); Tanaka, Hidekazu, Amagasaki-shi, Hyogo (JP)
(74) Representative: Thomson, Paul Anthony

(56) References cited:
- EP-A- 0 018 591
- EP-A- 0 282 985
- EP-A- 0 405 192
- EP-A- 0 464 561
- DATABASE WPIL Section Ch, Week 8704, 13 December 1986 Derwent Publications Ltd., London, GB; Class A13, AN 87-026319

## Description

### BACKGROUND OF THE INVENTION

### 1. Field of the Invention

The present invention relates to antistatic resin compositions having an excellent permanent antistatic property and adapted for use in injection molding for preparing moldings having an improved surface appearance.

### 2. Description of the Prior Art

ABS graft copolymers have excellent mechanical characteristics and are therefore used in a wide variety of fields, whereas these copolymers are not antistatic and have accordingly found limited application to office automation devices and dustproof uses wherein troubles due to static electricity are to be precluded.

Antistatic properties are imparted to ABS graft copolymers, for example, by coating the surface of the resin with surfactants or the like or by incorporating surfactants into the resin by kneading, but these methods still remain to be improved in the durability of antistatic effect. Articles of such resin become impaired in the durability especially when washed with water.

To overcome this drawback, it has been proposed to admix an epihalohydrin copolymer with the graft copolymer (U.S.P. No. 4,588,773, U.S.P. No. 4,719,263 and U.S.P. No. 4,775,716), to admix an ethylene oxide copolymer with the graft copolymer (E.P. No. 287,092A2), to add an acrylate polymer to the graft copolymer as a third component (E.P. No. 294,722A2) and to add a specific modified vinyl polymer to the graft copolymer (Unexamined Japanese Patent Publication No. 269147/1990). Although affording improved permanent antistatic properties, these methods are found to have the problem that the product obtained by injection molding has faults in the appearance of its surface,such as weld lines and pearl gloss. This problem reduces the commercial value of ABS resins which are generally used for the housings of office automation devices and household electric devices, interior finishing materials, etc. of which an esthetic appearance is required and which are often produced by injection molding, consequently limiting the use of the resin.

EP-A-294,722 discloses a polymer blend composition which has reduced delamination and improved ductility shown by tensile elongation, by adding acrylate polymer as the third component to styrenic polymer and epihalohydrin copolymer.

The main object of the present invention is to provide antistatic resin compositions for injection molding which comprise as their base an ABS resin giving an excellent surface appearance.

### SUMMARY OF THE INVENTION

According to the present invention there is provided an antistatic resin composition characterized in that the composition comprises:
(A) 100 parts by weight of an ABS graft copolymer comprising as component monomers an acrylonitrile compound and a vinyl aromatic compound in a weight ratio of 10:90 to 50:50; and
(B) 5 to 30 parts by weight of an ethylene oxide copolymer admixed with the ABS graft copolymer and containing at least 50 wt. % of ethylene oxide as a component monomer, the ethylene oxide copolymer having a refractive index (n_{D}²⁰) of at least 1.50;
in that the ABS graft copolymer comprises at least 40 wt. % of the combination of the vinyl aromatic compound and the acrylonitrile compound, and up to 60 wt. % of a rubber substrate;
in that the ethylene oxide copolymer comprises ethylene oxide as a first monomer and a second monomer, the second monomer being a compound represented by the general formula 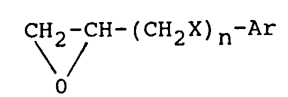 wherein Ar is a monocyclic aromatic group or heterocyclic aromatic group having a substituent selected from the group consisting of a halogen atom, aryl, aralkyl and a combination thereof, or a condensed aromatic group or heterocyclic aromatic group having or not having a substituent, n is an integer of 0 or 1, and X is 0 (oxygen), S (sulfur) or -O-CO-group; and
in that the second monomer is a compound having a refractive index (n_{D}²⁰) of at least 1.54.

The resin composition of the invention has an excellent antistatic property, gives moldings having a remarkably improved surface appearance and has a great industrial value.

### BRIEF DESCRIPTION OF THE DRAWINGS

FIG. 1 is a sectional view of a mold;
FIG. 2 is a plan view of a test piece; and
FIG. 3 is a view in section taken along the line III-III in FIG. 2.

### DETAILED DESCRIPTION OF THE INVENTION

The ABS graft copolymer to be used in the present invention comprises at least 40 wt. % of the combination of a vinyl aromatic compound and an acrylonitrile compound, and up to 60 wt. % of a rubber substrate.

Although the term "ABS" refers originally to a copolymer composed primarily of acrylonitrile, butadiene and styrene, this definition has been expanded in recent years to include copolymers in which these components have been replaced wholly or partially by closely analogous compounds and which substantially exhibit the characteristics of the so-called ABS resin with respect to basic properties such as moldability, rigidity, gloss and heat resistance.

The vinyl aromatic compounds useful as monomers for preparing the ABS graft copolymer are various copolymerizable vinyl aromatic compounds including vinylanilines, styrene, alpha-methylstyrene and like vinyl aromatic compounds, chlorostyrene, dibromostyrene and like halogenated styrenes, vinyltoluene and like alkylstyrenes. Mixtures of different vinyl aromatic compounds are also usable. Preferable among these are styrene, halogenated styrenes, alpha-methylstyrenes, alkylstyrenes and mixtures of such styrenes. In the most preferred mode of carrying out the invention, the graft copolymer contains at least a small amount of styrene.

Acrylonitrile compounds useful as other monomers for preparing the ABS graft copolymer are acrylonitrile, halogenated acrylonitriles, methacrylonitrile, ethacrylonitrile, alkylacrylonitrile derivatives, and derivatives of such compounds. Other non-nitrile acrylic compound, such as methyl methacrylate, ethacrylate or acrolein, may be present in the ABS graft copolymer in a relatively small amount of up to 20 wt. %, preferably up to 10 wt. %. It is suitable to use acrylonitrile and/or methacrylonitrile. Most suitably, the ABS graft copolymer contains acrylonitrile as the main acrylic compound and further contains a small amount of methacrylonitrile.

For the preparation of the ABS graft copolymer, the component monomers, i.e., acrylonitrile compound and vinyl aromatic compound, are used in a weight ratio ranging from 10:90 to 50:50. If the weight proportion of the acrylonitrile compound is less than this range, it becomes difficult to fulfill one of the objects of the invention, that is, to obtain injection-molded products having an excellent surface appearance. On the other hand, proportions exceeding this range are undesirable since the ABS graft copolymer then exhibits reduced flowability and lower thermal stability when the composition is to be molded. More preferably, the weight ratio ranges from 20:80 to 40:60.

Various known rubber substrates are usable as such for preparing the ABS graft copolymer. Preferred rubber substrates are those comprising a diene rubber. More preferred rubber substrates are polybutadiene rubbers and butadiene copolymer rubbers. Exemplary of such rubbers are copolymers of butadiene and up to 35% of a copolymerizable monomer, such as acrylonitrile, alkyl acrylate or alkyl methacrylate, or a vinyl aromatic monomer, such as styrene. Although not as desirable as diene rubbers, other rubber substrates are also usable. Examples of such substrates are acrylic rubbers derived from an alkyl acrylate homopolymer or copolymer, ethylene-propylene non-conjugated diene copolymer rubbers, semicrystalline or noncrystalline chlorinated polyethylene.

To obtain a resin of improved properties, the graft copolymer of the invention may contain small amounts of known additives as added thereto during polymerization. Examples of useful additives are divinyl-benzene, ethylene glycol dimethacrylate and like cross-linkable monomers.

Many of graft copolymers useful for the present invention are commercially available readily, or can be prepared by various known graft polymerization techniques.

For example, the copolymer can be prepared by copolymerizing an acrylonitrile monomer and a vinyl aromatic monomer with a rubber substrate which is obtained in advance. The specification of U.S.P. No. 3,238,275 discloses a typical process for preparing the traditional ABS graft copolymer from styrene and acrylonitrile. Also disclosed in the specification is a process for preparing an ABS resin wherein a graft copolymer having a high content of rubber substrate is admixed with a rigid copolymer prepared in advance, such as styrene-acrylonitrile copolymer (SAN), acrylonitrile-alpha-methylstyrene or styrene copolymer.

The proportions of vinyl aromatic compound, acrylonitrile compound and rubber substrate vary depending partly on the desired characteristics of the thermoplastic resin to be obtained. However, from the viewpoint of ensuring moldability, rigidity, impact resistance, gloss, heat resistance and like properties in good balance, the ABS graft copolymer comprises preferably at least 40 wt. % of the combination of a vinyl aromatic compound and an acrylonitrile compound, and up to 60 wt. % of a rubber substrate, more preferably at least 50 wt. % of the combination of vinyl aromatic compound and acrylonitrile compound, and up to 50 wt. % of the rubber substrate.

Also usable is a polymer blend comprising an ABS graft copolymer and other polymer substituted for a portion of the graft copolymer provided that the blend exhibits the characteristics of the ABS graft copolymer. Examples of preferred polymers for use in such blends are vinyl chloride polymer, styrene polymer, impact-resistant styrene polymer, methyl methacrylate polymer, polyurethane, polycarbonate, polyamide, polybutylene terephthalate and like polyesters, polyphenylene ether, polyglutarimide, chlorinated polyethylene, etc. The blend contains usually at least 30 wt. %, preferably at least 50 wt. %, of the ABS graft polymer.

The ethylene oxide copolymer to be admixed with the ABS graft copolymer contains at least 50 wt. %, preferably at least 65 wt. %, of ethylene oxide as a component monomer, whereby a resin composition having an excellent antistatic property can be obtained. The ethylene oxide is copolymerized with other specified monomer to give the resulting copolymer a refractive index (n_{D}²⁰) of at least 1.50, usually 1.50 - 1.60. Presence of this copolymer in the present resin composition gives a product of remarkably improved surface appearance when the composition is subjected to injection molding.

The expression "faults in the surface appearance of the product" as used herein refers to a so-called pearl gloss, and a weld line, i.e., a linear mark produced by the confluence of portions of the resin composition within the mold used for injection molding. ABS resins contain an aromatic group as the primary group and therefore have a relatively high refractive index of at least about 1.55 although this value varies with the copolymer composition thereof: It is well known that in the case where the ABS resin is used as admixed with other polymer, the two polymers are made approximate to each other in refractive index to the greatest possible extent to obtain a resin composition of high transparency. However, weld lines are likely to occur even when a resin composition containing a single resin is injection-molded. It is therefore totally unexpectable that a composition comprising a mixture of ABS resin and ethylene oxide copolymer, like the composition of the invention, ameliorate a faulty appearance due to weld lines owing to the fact that the two components are approximate in refractive index.

The component monomers constituting the ethylene oxide copolymer are ethylene oxide as a first monomer, and a second monomer having a refractive index (n_{D}²⁰) of at least 1.54, usually 1.55 - 1.70. The second monomer is selected from among the compounds represented by the following general formula. 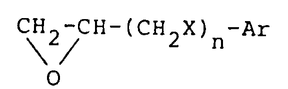 wherein Ar is a monocyclic aromatic group or heterocyclic aromatic group having a substituent selected from the group consisting of a halogen atom, aryl, aralkyl and a combination thereof , or a condensed aromatic group or heterocyclic aromatic group having or not having a substituent, n is an integer of 0 or 1, and X is O (oxygen), S (sulfur) or -O-CO-group.

More specific examples of such compounds are phenyl glycidyl ethers having phenyl substituted with a halogen atom, such as 2-chlorophenyl glycidyl ether, 4-chlorophenyl glycidyl ether, 2,4,6-trichlorophenyl glycidyl ether, 2,4-dibromophenyl glycidyl ether and 2,4-dibromocresyl glycidyl ether, phenyl glycidyl ethers wherein the phenyl is substituted with a substituent containing an aromatic group, such as 2-phenylphenyl glycidyl ether, 4-phenylphenyl glycidyl ether, 4-benzylphenyl glycidyl ether and 4-cumylphenyl glycidyl ether, aryl glycidyl ethers wherein the aryl is a condensed aromatic group, such as 1-naphthyl glycidyl ether, 2-naphthyl glycidyl ether and 9-phenanthryl glycidyl ether, aryl glycidyl ethers wherein the aryl is a condensed aromatic group substituted with a halogen atom, such as 4-chloro-1-naphthyl glycidyl ether, 2,4-dichloro-1-naphthyl glycidyl ether, 1-bromo-2-naphthyl glycidyl ether, 2-bromo-2-naphthyl glycidyl ether and 1,6-dibromo-2-naphthyl glycidyl ether, phenyl glycidyl thioethers such as 4-chlorophenyl glycidyl thioether and 2-chlorophenyl glycidyl thioether, styrene oxides wherein the phenyl is substituted with a halogen atom, such as 4-chorostyrene oxide, 2-chlorostyrene oxide, 2,6-dichlorostyrene oxide and 4-bromostyrene oxide, epoxides of condensed aromatic compounds substituted with vinyl, such as 2-vinylnaphthalene oxide and 9-vinylphenanthrene oxide, glycidyl ethers of condensed heterocyclic aromatic compounds such as 4-(2,3-epoxypropoxy)indole, glycidyl esters of benzoic acids substituted with a halogen atom, such as glycidyl-2-chlorobenzoate, glycidyl-3-chlorobenzoate, glycidyl-2,4-dichlorobenzoate, glycidyl-2,5-dichlorobenzoate, glycidyl-2-bromobenzoate and glycidyl-4-bromobenzoate, glycidyl esters of condensed aromatic carboxylic acids, such as glycidyl-1-napthoate and glycidyl-2-naphthoate.

Beside the compounds of the general formula, also usable as a component monomer of the ethylene oxide copolymer is a condensed heterocyclic aromatic compound substituted with glycidyl, such as glycidyl carbazole, glycidyl indole or glycidyl phenothiazine.

As a component copolymerizable with ethylene oxide and the above monomer, other epoxy monomer, which is a third monomer, is usable in combination therewith when required insofar as the resulting copolymer contains at least 50 wt. % of ethylene oxide and has a refractive index (n_{D}²⁰) of at least 1.50. Examples of useful third monomers are propylene oxide, 1-butene oxide and like alkylene oxides, cyclohexene oxide, vinylcyclohexene monoxide and like cycloalkyl epoxides, styrene oxide, alpha-methylstyrene oxide and like aromatic substituted epoxides, epichlorohydrin, epibromohydrin and like halogen-substituted alkylene oxides, ethyl glycidyl ether, butyl glycidyl ether, chloroethyl glycidyl ether and like alkyl glycidyl ethers, allyl glycidyl ether and like alkenyl glycidyl ethers, phenyl glycidyl ether and like aromatic glycidyl ethers, glycidyl acetate, glycidyl propionate, glycidyl methacrylate, glycidyl benzoate and like glycidyl esters.

The ethylene oxide copolymer for use in the present invention is prepared from at least 50 wt. % of ethylene oxide, the second monomer having a refractive index of at least 1.54, usually 1.55 - 1.70, and the third monomer which is used when required, by subjecting the combination of these compounds to ring opening polymerization.

The molecular weight of the ethylene oxide copolymer is preferably in the range of 0.5 to 10, more preferably 1 to 5, in terms of a reduced viscosity as measured at 80° C using 0.1 g/dl monochlorobenzene solution. If the molecular weight is lower than this range, the composition of the invention exhibits impaired mechanical characteristics, whereas if it is higher than the range, the composition undesirably becomes lower in moldability, especially in flowability in the mold.

The polymerization catalyst to be used can be any of those known, such as dialkylzinc-water, trialkylaluminum-water-acetylacetone, and thermal condensation product of an organotin compound and a phosphoric acid ester.

Examples of solvents useful for the copolymerization reaction are butane, pentane, hexane, heptane, benzene, toluene, chlorobenzene. Alternatively, the reaction can be conducted in the absence of solvent.

The reaction temperature is preferably in the range of 0 to 60° C.

The copolymer may be any of block copolymer, graft copolymer, random copolymer and alternating copolymer, but is preferably a random copolymer to obtain excellent antistatic properties.

The ethylene oxide copolymer is used in the present invention in an amount of 5 to 30 parts by weight per 100 parts by weight of the ABS graft copolymer, whereby the objects of the invention can be fulfilled. If the amount is less than this range, it becomes difficult to obtain antistatic properties which is one of the objects of the invention, while amounts exceeding this range are undesirable since the mechanical characteristics inherent in the ABS resin then become impaired. The amount of the ethylene oxide copolymer is preferably 8 to 25 parts by weight per 100 parts by weight of the ABS graft copolymer. The ethylene oxide copolymer can be used as blended with ethylene oxide homopolymer or other ethylene oxide copolymer insofar as the characteristics contemplated by the present invention can be imparted to the resulting resin composition. To be suitable, the blend contains at least 30 wt. %, preferably at least 50 wt. %, of the ethylene oxide copolymer of the invention.

The resin composition of the present invention is obtained by mixing together the ABS graft copolymer and the ethylene oxide copolymer by one of various techniques, for example, by mixing in a Banbury mixer, mixing in a molten state, extrusion or pulverization in a mill.

The ethylene oxide copolymer and ABS graft copolymer to be used in the present invention can be partially replaced by such a component as is disclosed in Unexamined Japanese Patent Publication No. 269147/1990, i.e., a modified vinyl polymer having at least one functional group selected from among carboxyl, epoxy, amino, hydroxyl, polyalkylene oxide and derivatives thereof in such an amount that the characteristics of the ABS graft copolymer can be imparted to the resulting composition. Although the amount of the modified vinyl polymer selected is variable over a suitable range which is dependent on the properties thereof, usually at least 30 wt. %, preferably at least 50 wt. %, of the ABS graft copolymer should be present.

The present composition may have incorporated therein a small amount of dicumyl peroxide or like crosslinking agent although the crosslinking agent is not always necessary for suitable compositions. Also usable are other known additives including, for example, impact resistance improving agents, lubricants, stabilizers, fillers, antioxidants, ultraviolet absorbers and flame retardants. Further usable are known antistatic agents which include, for example, long-chain amines, ethers and esters; amides, quaternary ammonium salts and sulfonic acid; alkyl, aryl or alkylaryl sulfonates, phosphoric acid, alkyl, aryl or aralkyl phosphates, and low-molecular-weight polyether glycols. These additives may be added to the ethylene oxide copolymer and/or the ABS graft copolymer individually, to the ethylene oxide copolymer and the resin component when they are mixed together, or to the mixture.

The present invention will be described more specifically in detail with reference to the following examples.

### Reference Example 1

### a) Preparation of Polymerization Catalyst

A 37.6 g quantity of dibutyltin oxide and 80.3 g of tributyl phosphate were placed into a 1-liter four-necked flask equipped with a stirrer, nitrogen supply tube, low-boiling-point substance discharge tube and thermometer. The air in the flask was replaced by nitrogen, and the mixture was thereafter heated at 250^{o} C for 20 minutes with stirring to obtain a solid product for use as a polymerization catalyst.

### b) Preparation of Ethylene Oxide Copolymer

Into a 20-liter stainless steel reactor equipped with a stirrer, nitrogen supply tube, thermometer and sample supply tube were placed in a nitrogen atmosphere 4200 g of hexane, 823 g of ethylene oxide, 282 g of 1-naphthyl glycidyl ether and 15 g of the catalyst prepared by the above procedure, which were then reacted at 20° C for 8 hours with stirring. After the completion of reaction, 5 ml of water and 5.5 g of 4,4'-thiobis(3-methyl-6-tert-butylphenol) serving as an antioxidant were added to the reaction mixture, followed by stirring at room temperature for 15 minutes.

Subsequently, the polymer produced was collected by filtration, washed with hexane and thereafter dried at 50° C overnight to obtain a copolymer (1060 g). The copolymer was found to be composed of ethylene oxide and 1-naphthyl glycidyl ether in a weight ratio of 75:25 by the NMR method. This polymer had a refractive index (n_{D}²⁰) of 1.508.

### Reference Examples 2-7

Ethylene oxide copolymers were prepared in the same manner as in Reference Example 1. Tables 1 and 2 show the results.

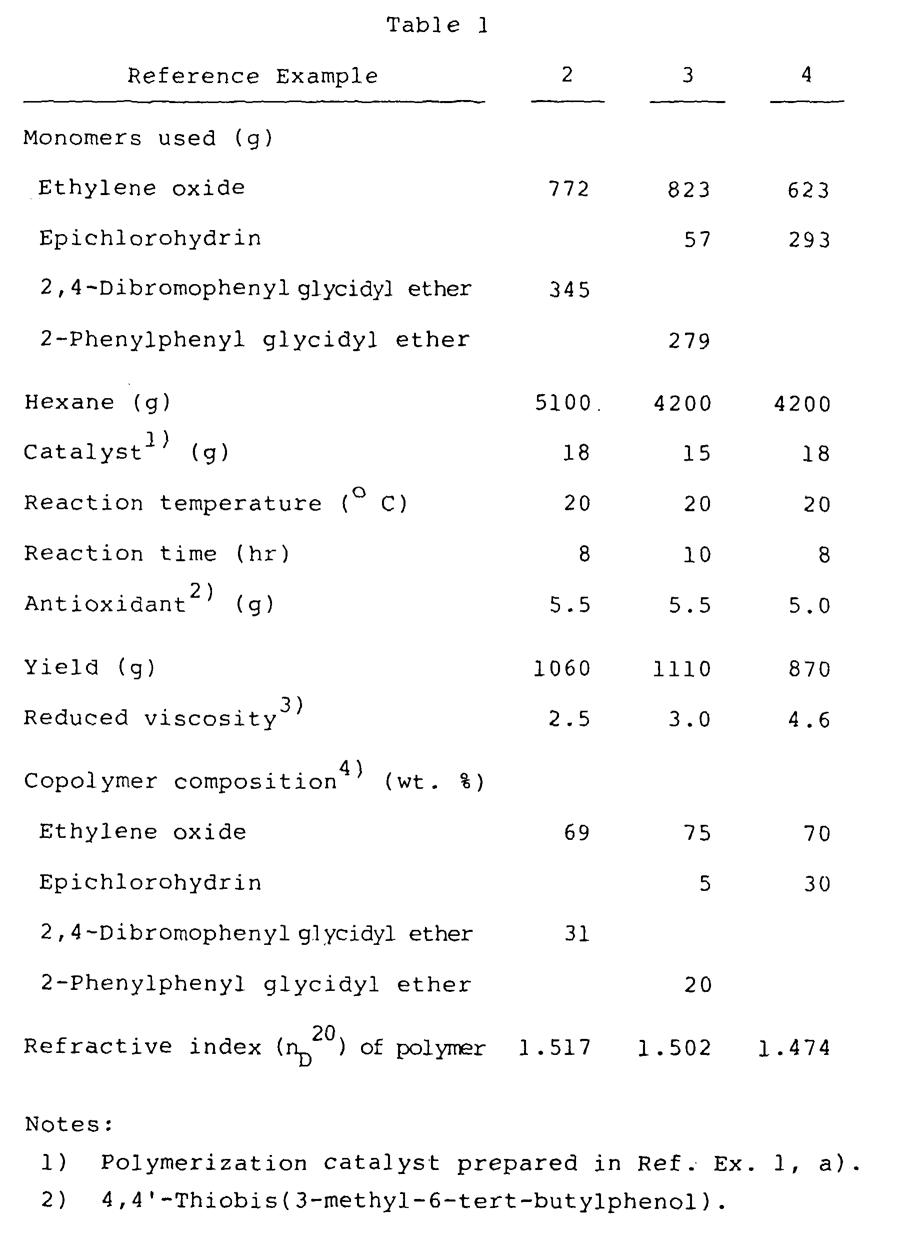

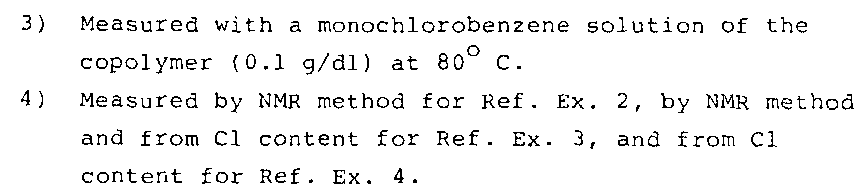

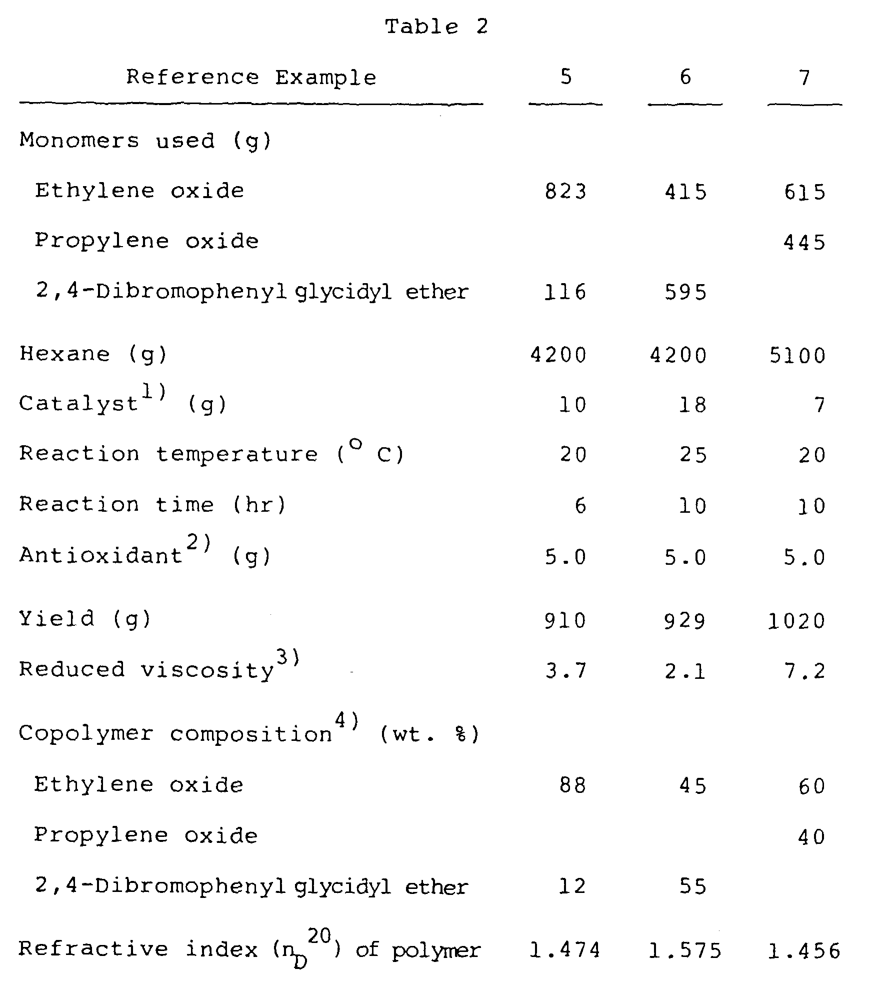

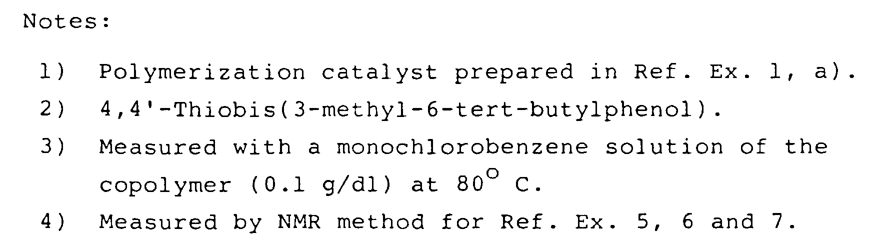

The ethylene oxide copolymers of Reference Examples 1, 2 and 3 are those adapted for use in the invention.

### Examples 1, 2 and Comparative Examples 1, 2

An ABS graft copolymer (I) comprising 30 wt. % of acrylonitrile, 55 wt. % of styrene and 15 wt. % of butadiene was prepared by the known emulsion polymerization process and graft polymerization process. Compositions were prepared by admixing with 100 parts by weight of the copolymer (I) 0.5 part by weight of ethylene-bis-stearamide serving as a lubricant and 0.5 part by weight of Phthalocyanine Blue as a pigment, or further admixing with the resulting composition 10 or 20 parts by weight of the ethylene oxide copolymer obtained in Reference Example 1, or 20 parts by weight of the copolymer obtained in Reference Example 4. Each of these compositions was pelletized and injection-molded by the following methods. Table 3 shows the surface appearance and physical properties of the moldings obtained.

### Pelletization

The composition was kneaded in a Banbury mixer having a capacity of 1.7 liters, then made into a sheet with a twin roll having a surface temperature of 170^{o} C, cooled and thereafter pelletized to about 4 mm cube by a pelletizer.

### Injection molding

The pelletized composition was dried at 90^{o} C for 4 hours in a tray dryer and then subjected to injection molding. The molding machine used was All-rounder A170H (90-200), product of ARBURG CO., LTD.

The molding conditions were as follows.

| | |
|---|---|
| Screw diameter: | 22 mm |
| Cylinder temperature: | 220^{o} C |
| Injection pressure: | 2000 kg/cm² |
| Injection time: | 0.5 sec |
| Follow-up pressure: | 1500 kg/cm² |
| Dwell time: | 7 sec |
| Mold temperature: | 60^{o} C |
| Clamping force: | 18 t |
| Cooling time: | 10 sec |

### Mold

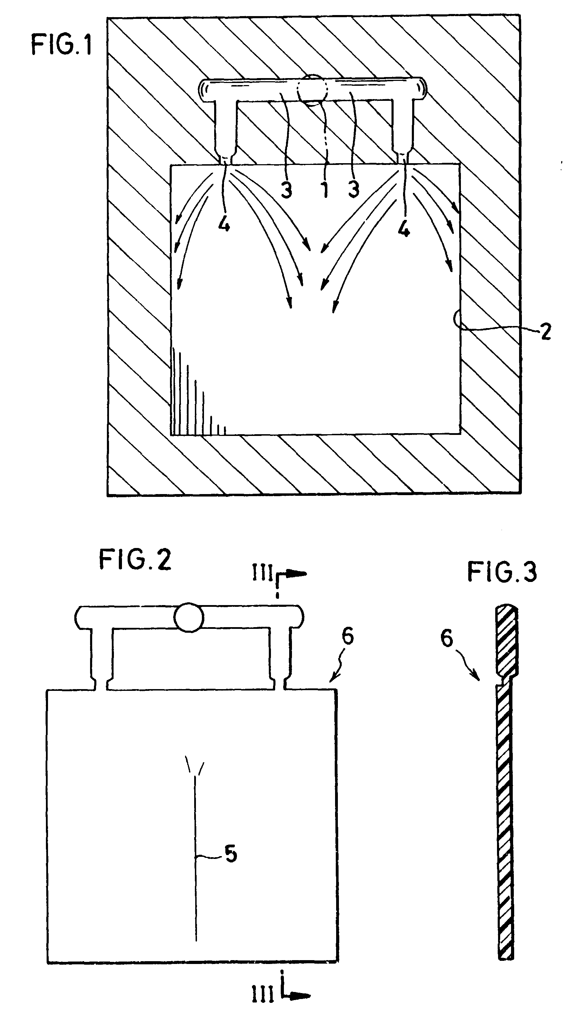

The mold has a cavity 2 in the form of a flat plate measuring 81 mm x 87 mm x 2 mm (thickness), and two runners (4 mm in inside diameter) 3 branching from a sprue (5 mm in the diameter of its base portion) 1 as shown in FIG. 1. The resin is filled into the cavity 2 through two gates 4.

Gate 1and 2 mm, width 2mm, thickness 1 mm. Spacing between the gates 51 mm.

FIGS. 2 and 3 show a test piece 6 produced by injection molding with use of the mold. The mold is so designed that a weld line 5 occurs approximately centrally of the flat platelike test piece 6.

### Surface appearance

The test piece was checked for a weld line and pearl gloss with the eye. The results are represented by symbols.

### Physical properties

### Antistatic properties

Charge decay rate (sec): A 10 KV charge was applied to the test piece, and the time this charge took to decay to one-half was determined, using an honest meter (product of Shishido Seidenki Co., Ltd.).

Surface resistivity (ohms): Determined according to JIS K 6911 at 23^{o} C, 50% RH.

### Mechanical characteristics

- Stress at yield (kg/cm²):: ASTM D-638, 50 mm/min.
- Elongation at breakage (%):: ASTM D-638, 50 mm/min.
- Izod impact strength (kg cm/cm):: ASTM D-256-56A (with 1.27 cm (1/2 in). notch).
- Flexural modulus (kg/cm²):: ASTM D-790.

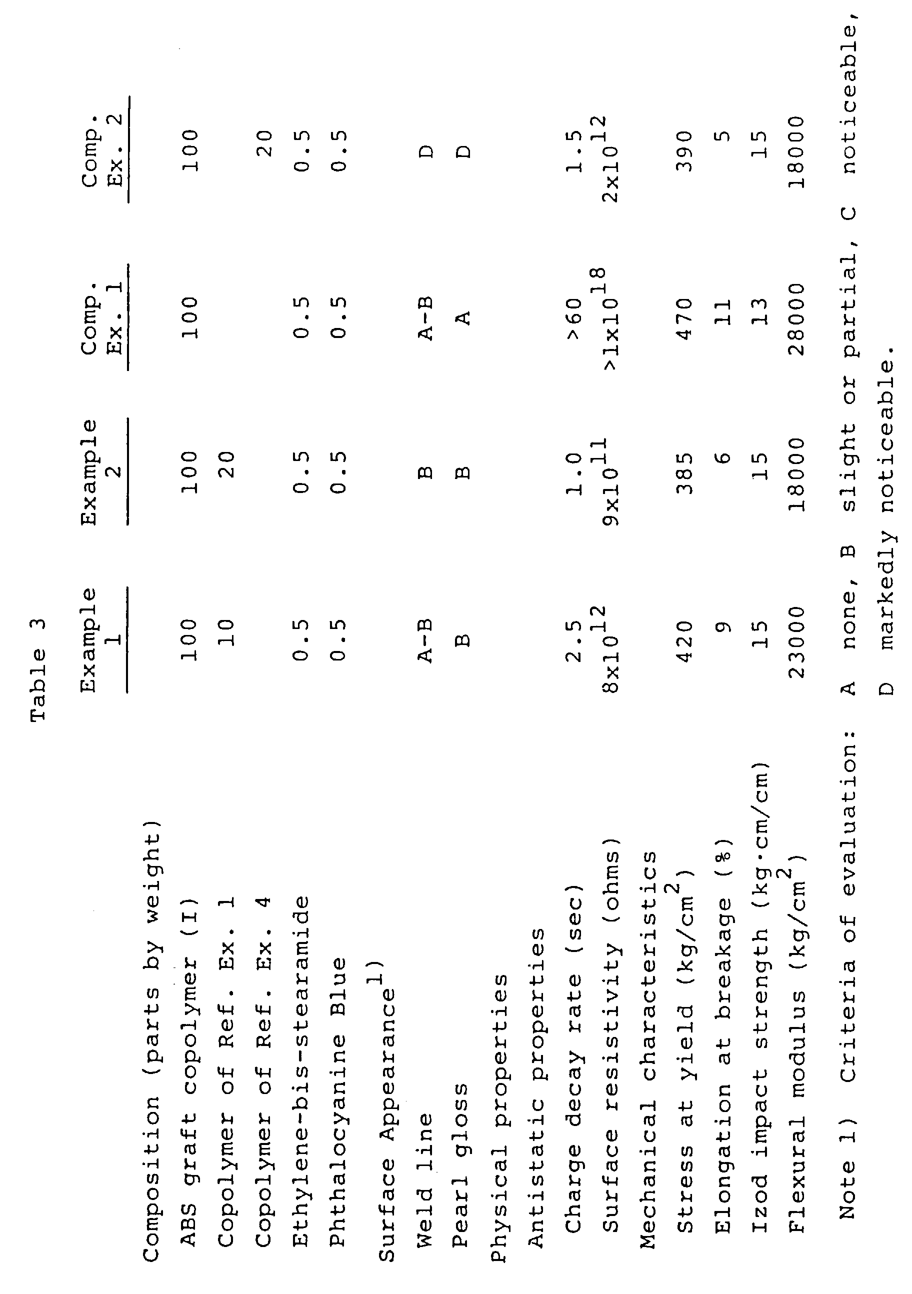

### Examples 3, 4 and Comparative Examples 3-6

Compositions were prepared by admixing 0.5 part by weight of ethylene-bis-stearamide as a lubricant, 0.5 part by weight of Phthalocyanine Blue as a pigment and the copolymer prepared in Reference Example 1, 2, 5, 6 or 7 with 100 parts by weight of combined amount of the ABS graft copolymer (I) used in Example 1 and an ABS graft copolymer (II) (comprising 5 wt. % of acrylonitrile, 15 wt. % of butadiene and 80 wt. % of styrene) prepared by the known emulsion polymerization process. The compositions were molded and tested in the same manner as in Example 1. Table 4 shows the results.

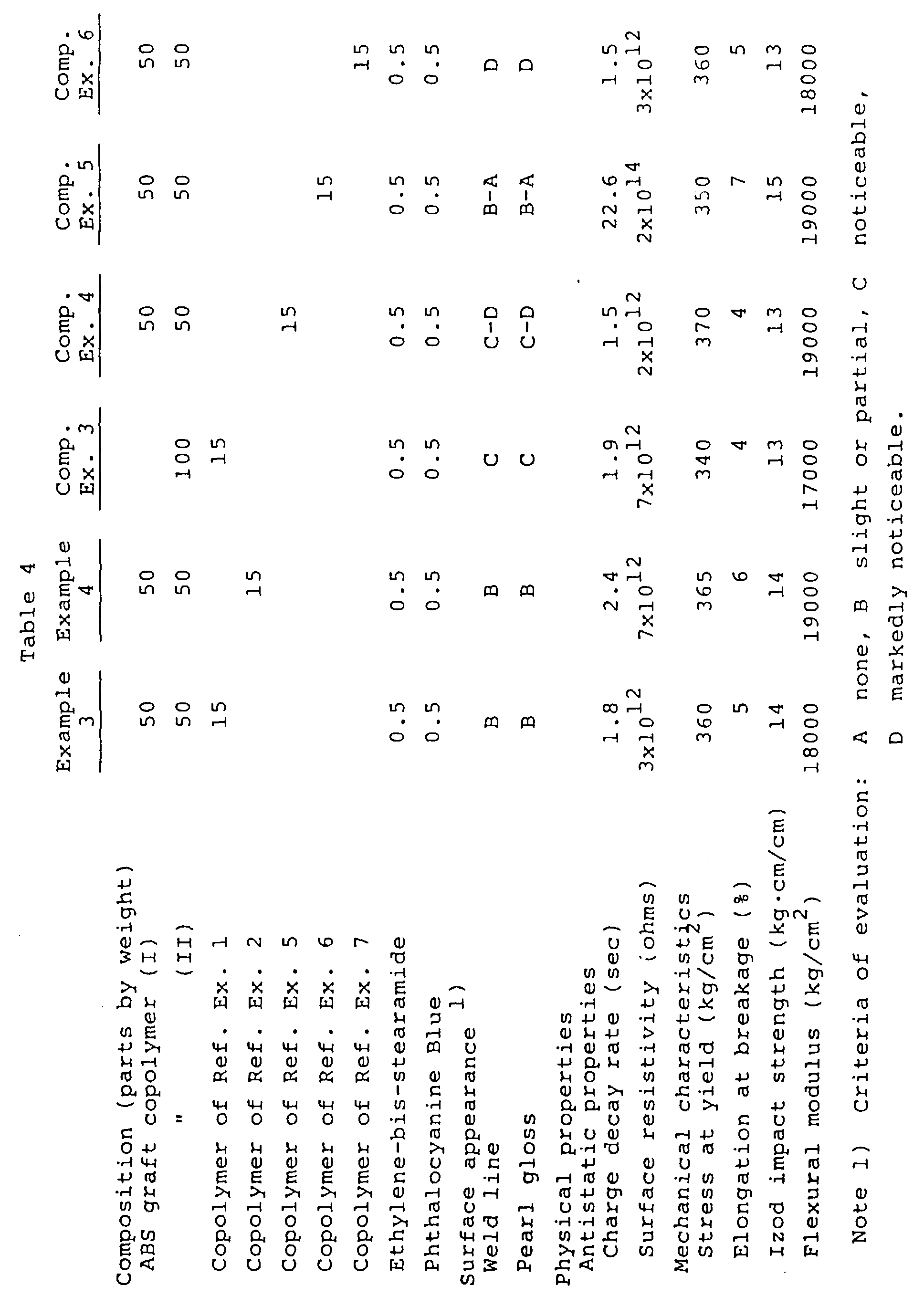

### Examples 5, 6 and Comparative Examples 7-9

Compositions were prepared by admixing 0.5 part by weight of ethylene-bis-stearamide as a lubricant, 0.5 part by weight of Phthalocyanine Blue as a pigment, 0.5 part by weight of dibutyltin maleate as a stabilizer and the copolymer prepared in Reference Example 3 with 90 parts by weight of the same copolymer as the ABS graft copolymer (I) used in Example 1 and 10 parts by weight of polyvinyl chloride having a polymerization degree of 800.

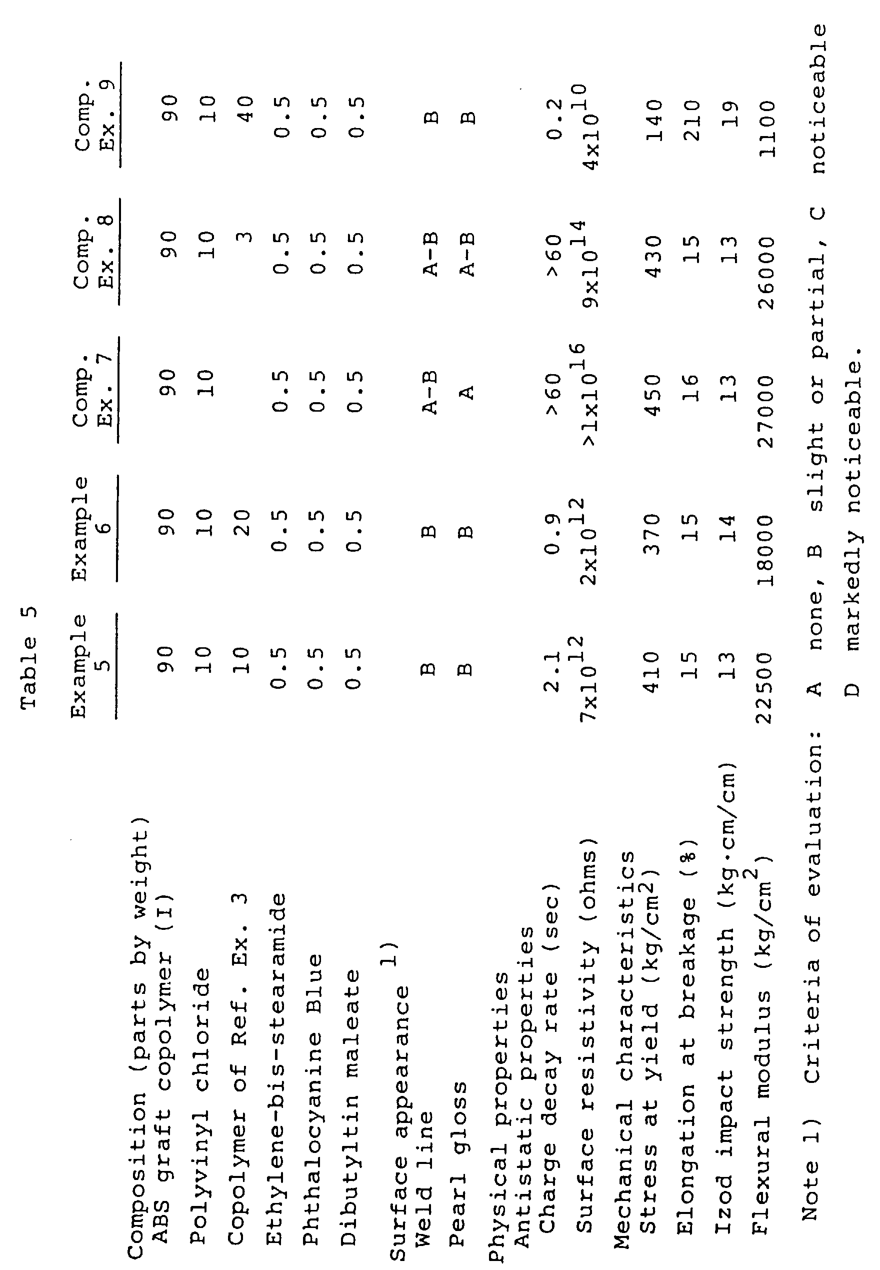

## Claims

1. An antistatic resin composition characterized in that the composition comprises:
(A) 100 parts by weight of an ABS graft copolymer comprising as component monomers an acrylonitrile compound and a vinyl aromatic compound in a weight ratio of 10:90 to 50:50; and
(B) 5 to 30 parts by weight of an ethylene oxide copolymer admixed with the ABS graft copolymer and containing at least 50 wt. % of ethylene oxide as a component monomer, the ethylene oxide copolymer having a refractive index (n_{D}²⁰) of at least 1.50;
in that the ABS graft copolymer comprises at least 40 wt. % of the combination of the vinyl aromatic compound and the acrylonitrile compound, and up to 60 wt. % of a rubber substrate;
in that the ethylene oxide copolymer comprises ethylene oxide as a first monomer and a second monomer, the second monomer being a compound represented by the general formula 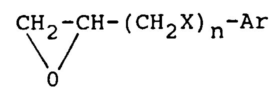 wherein Ar is a monocyclic aromatic group or heterocyclic aromatic group having a substituent selected from the group consisting of a halogen atom, aryl, aralkyl and a combination thereof, or a condensed aromatic group or heterocyclic aromatic group having or not having a substituent, n is an integer of 0 or 1, and X is 0 (oxygen), S (sulfur) or -0-C0-group; and
in that the second monomer is a compound having a refractive index (n_{D}²⁰) of at least 1.54.

2. A composition as claimed in claim 1, characterized in that the weight ratio of the acrylonitrile compound to the vinyl aromatic compound is 20:80 to 40:60.

3. A composition as claimed in claim 1 or 2, characterized in that the acrylonitrile compound is a compound selected from acrylonitrile, halogenated acrylonitriles, methacrylonitrile or ethacrylonitrile.

4. A composition as claimed in claim 1, 2 or 3, characterized in that the vinyl aromatic compound is a compound selected from vinylanilines, styrene, alphamethylstyrene, halogenated styrenes or alkylstyrenes.

5. A composition as claimed in any preceding claim, characterized in that the rubber substrate is a compound selected from butadiene rubber, copolymer of butadiene and acrylonitrile, alkyl acrylate, alkyl methacrylate or vinyl aromatic monomer, acrylic rubber derived from an alkyl acrylate homopolymer or copolymer, ethylene-propylene non-conjugated diene copolymer rubber or semicrystalline or noncrystalline chlorinated polyethylene.

6. A composition as claimed in any preceding claim, characterized in that the ABS graft copolymer is used as blended with a polymer selected from the group consisting of vinyl chloride polymer, styrene polymer, impact-resistant styrene polymer, methyl methacrylate polymer, polyurethane, polycarbonate, polyamide, polyester, polyphenylene ether, polyglutarimide and chlorinated polyethylene, the proportion of the ABS graft copolymer being at least 30 wt. % based on the blend.

7. A composition as claimed in any preceding claim, characterized in that the second monomer is a compound selected from a phenyl glycidyl ether having phenyl substituted with a halogen atom, phenyl glycidyl ether wherein the phenyl is substituted with a substituent containing an aromatic group, aryl glycidyl ether wherein the aryl is a condensed aromatic group, aryl glycidyl ether wherein the aryl is a condensed aromatic group substituted with a halogen atom, phenyl glycidyl thioether, styrene oxide wherein the phenyl is substituted with a halogen atom, epoxide of a condensed aromatic compound substituted with *vinyl, glycidyl* ether of a condensed heterocyclic aromatic compound, glycidyl ester of a benzoic acid substituted with a halogen atom, or glycidyl ester of a condensed aromatic carboxylic acid.

8. A composition as claimed in claim 7, characterized in that the phenyl glycidyl ether having phenyl substituted with a halogen atom is a compound selected from 2-chlorophenyl glycidyl ether, 4-chlorophenyl glycidyl ether, 2,4,6-trichlorophenyl glycidyl ether, 2,4-dibromophenyl glycidyl ether or 2,4-dibromocresyl glycidyl ether.

9. A composition as claimed in claim 7, characterized in that the phenyl glycidyl ether wherein the phenyl is substituted with a substituent containing an aromatic group is a compound selected from 2-phenylphenyl glycidyl ether, 4-phenylphenyl glycidyl ether, 4-benzylphenyl glycidyl ether or 4-cumylphenyl glycidyl ether.

10. A composition as claimed in claim 7, characterized in that the aryl glycidyl ether wherein the aryl is a condensed aromatic group is 1-naphthyl glycidyl ether, 2-naphthyl glycidyl ether or 9-phenanthryl glycidyl ether.

11. A composition as claimed in claim 7, characterized in that the aryl glycidyl ether wherein the aryl is a condensed aromatic group substituted with a halogen atom is a compound selected from 4-chloro-1-naphthyl glycidyl ether, 2,4-dichloro-1-naphthylglycidyl ether, 1-bromo-2-naphthyl glycidyl ether, 2-bromo-2-naphthyl glycidyl ether or 1,6-dibromo-2-naphthyl glycidyl ether.

12. A composition as claimed in claim 7, characterized in that the phenyl glycidyl thioether is 4-chlorophenyl glycidyl thioether or 2-chlorophenyl glycidyl thioether.

13. A composition as claimed in claim 7, characterized in that the styrene oxide wherein the phenyl is substituted with a halogen atom is 4-chlorostyrene oxide, 2-chlorostyrene oxide, 2,6-dichlorostyrene oxide or 4-bromostyrene oxide.

14. A composition as claimed in claim 7, characterized in that the oxide of a condensed aromatic compound substituted with vinyl is 2-vinylnaphthalene oxide or 9-vinylphenanthrene oxide.

15. A composition as claimed in claim 7, characterized in that the glycidyl ether of a condensed heterocyclic aromatic compound is 4-(2,3-epoxypropoxy)indole.

16. A composition as claimed in claim 7, characterized in that the glycidyl ester of a benzoic acid substituted with a halogen atom is a compound selected from glycidyl-2-chlorobenzoate, glycidyl-3-chlorobenzoate, glycidyl-2,4-dichlorobenzoate, glycidyl-2,5-dichlorobenzoate, glycidyl-2-bromobenzoate or glycidyl-4-bromobenzoate.

17. A composition as claimed in claim 7, characterized in that the glycidyl ester of a condensed aromatic carboxylic acid is glycidyl-1-naphthoate or glycidyl-2-naphthoate.

18. A composition as claimed in any preceding claim, characterized in that the ethylene oxide copolymer comprises ethylene oxide as a first monomer and a second monomer which is a condensed heterocyclic aromatic compound substituted with glycidyl.

19. A composition as claimed in claim 18, characterized in that the condensed heterocyclic aromatic compound substituted with glycidyl is glycidyl carbazole, glycidyl indole or glycidyl phenothiazine.

20. A composition as claimed in any preceding claim, characterized in that the ethylene oxide copolymer comprises ethylene oxide, the second monomer and further a third monomer.

21. A composition as claimed in claim 20, characterized in that the third monomer is a compound selected from an alkylene oxide, cycloalkyl epoxide, aromatic substituted epoxide, halogen-substituted alkylene oxide, alkyl glycidyl ether, alkenyl glycidyl ether, aromatic glycidyl ether or glycidyl ester.

22. A composition as claimed in claim 21, characterized in that the alkylene oxide is propylene oxide or 1-butene oxide.

23. A composition as claimed in claim 21, characterized in that the cycloalkyl epoxide is cyclohexene oxide or vinylcyclohexene monoxide.

24. A composition as claimed in claim 21, characterized in that the aromatic substituted epoxide is styrene oxide or alpha-methylstyrene oxide.

25. A composition as claimed in claim 21, characterized in that the halogen-substituted alkylene oxide is epichlorohydrin or epibromohydrin.

26. A composition as claimed in claim 21, characterized in that the alkyl glycidyl ether is ethyl glycidyl ether, butyl glycidyl ether or chloroethyl glycidyl ether.

27. A composition as claimed in claim 21, characterized in that the alkenyl glycidyl ether is allyl glycidyl ether.

28. A composition as claimed in claim 21, characterized in that the aromatic glycidyl ether is phenyl glycidyl ether.

29. A composition as claimed in claim 1, characterized in that the glycidyl ester is a compound selected from glycidyl acetate, glycidyl propionate, glycidyl methacrylate or glycidyl benzoate.

30. A composition as claimed in any preceding claim, characterized in that the ethylene oxide copolymer is present in an amount of 8 to 25 parts by weight per 100 parts by weight of the ABS graft copolymer.

31. A composition as claimed in any preceding claim, characterized in that the ethylene oxide copolymer (B) is used as blended with ethylene oxide homopolymer and/or other ethylene oxide copolymer, the proportion of the ethylene oxide copolymer (B) being at least 30 wt. % based on the blend.

32. A composition as claimed in any preceding claim, characterized in that the second monomer is a compound having a refractive index (n_{D}²⁰) of at least 1.55.

33. A composition as claimed in any preceding claim, characterized in that the molecular weight of the ethylene oxide copolymer is 0.5 to 10 in terms of a reduced viscosity as measured at 80° C using 0.1 g/dl monochlorobenzene solution thereof.

## Patentansprüche

1. Antistatische Harzzusammensetzung dadurch gekennzeichnet, daß die Zusammensetzung umfaßt:
(A) 100 Gewichtsteile eines ABS-Propf-Copolymeren umfassend als Monomerkomponenten eine Acrylnitrilverbindung und eine vinylaromatische Verbindung in einem Gewichtsverhältnis von 10:90 bis 50:50; und
(B) 5 bis 30 Gewichtsteile eines Ethylenoxidcopolymeren vermischt mit dem ABS-Propf-Copolymeren und enthaltend wenigstens 50 Gewichtsprozent Ethylenoxid als Monomerkomponente, wobei das Ethylenoxidcopolymere einen Brechungsindex (n_{D}²⁰) von wenigstens 1,50 hat;
wobei das ABS-Propf-Copolymere umfaßt wenigstens 40 % einer Kombination aus der vinylaromatischen Verbindung und der Acrylnitrilverbindung und bis zu 60 % eines Gummisubstrates;
wobei das Ethylenoxidcopolymere Ethylenoxid als erstes Monomer umfaßt und ein zweites Monomer, wobei das zweite Monomer eine Verbindung ist, die durch die allgemeine Formel 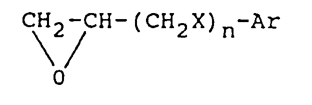 wiedergegeben wird
in der Ar eine monozyklische aromatische Gruppe oder eine heterozyklische aromatische Gruppe ist mit einem Substituenten der ausgewählt wird aus der Gruppe bestehend aus einem Halogenatom, Aryl, Aralkyl und einer Kombination dieser, oder einer kondensierten aromatischen Gruppe oder heterozyklischen aromatischen Gruppe die einen Substituenten hat oder auch keinen Substituenten hat, wobei n eine ganze Zahl und 0 oder 1 ist und X O bedeutet (Sauerstoff) S (Schwefel) oder eine O-CO-Gruppe; und
wobei das zweite Monomer eine Verbindung ist die einen Brechungsindex (n_{D}²⁰) von wenigstens 1,54 hat.

2. Zusammensetzung gemäß Anspruch 1, dadurch gekennzeichnet, daß das Gewichtsverhältnis der Acrylnitrilverbindung zu der vinylaromatischen Verbindung zwischen 20:80 und 40:60 beträgt.

3. Zusammensetzung gemäß Anspruch 1 oder 2, dadurch gekennzeichnet, daß die Acrylnitrilverbindung eine Verbindung ausgewählt ist aus Acrylnitril, halogenierten Acrylnitrilen, Methacrylnitril oder Ethacrylnitril.

4. Zusammensetzung gemäß Anspruch 1, 2 oder 3, dadurch gekennzeichnet, daß die vinylaromatische Verbindung eine Verbindung ist ausgewählt aus den Vinylanilinen, Styrol, Alphamethylstyrol, halogenierten Styrolen oder Alkylstyrolen.

5. Zusammensetzung gemäß einem der vorhergehenden Ansprüche, dadurch gekennzeichnet, daß das Gummisubstrat eine Verbindung ist ausgewählt aus Butadiengummi, einem Copolymer aus Butadien und Acrylnitril, Alkylacrylat, Alkylmethacrylat oder einem vinylaromatischen Monomer, ein Acrylgummi der sich ableitet von einem Alkylacrylat Homopolymeren oder -Copolymeren, einem Gummi aus Ethylen-Propylen nicht konjugiertem Diencopolymeren oder Semikristallinen oder Nichtkristallinen chlorierten Polyethylenen.

6. Zusammensetzung gemäß einem der vorhergehenden Ansprüche, dadurch gekennzeichnet, daß das ABS-Propf-Copolymere eingesetzt wird verschnitten mit einem Polymer ausgewählt aus der Gruppe bestehend aus Vinylchloridpolymeren, Styrolpolymeren, schlagzähen Styrolpolymeren, Methylmethacrylatpolymeren, Polyurethan, Polycarbonat, Polyamid, Polyester, Polyphenylenether, Polyglutarimide und chloriertem Polyethylen, wobei der Anteil an dem ABS-Propf-Copolymer wenigstens 30 % auf Basis des Verschnitts beträgt.

7. Zusammensetzung gemäß einem der vorhergehenden Ansprüche, dadurch gekennzeichnet, daß das zweite Monomer eine Verbindung ist ausgewählt aus einem Phenylglycidylether der Phenyl-substituiert ist mit einem Halogenatom, einem Phenylglycidylether bei dem Vinyl mit einem Substituenten substituiert ist, der eine aromatische Gruppe enthält, einem Arylglycidylether bei dem Aryl eine kondensierte aromatische Gruppe ist, einem Arylglycidylether bei dem Aryl eine kondensierte aromatische Gruppe ist, die mit einem Halogenatom substituiert ist, einem Vinylglycidylthioether, Styroloxid, wobei Vinyl substituiert ist mit einem Halogenatom, einem Epoxid aus einem kondensierten Aromaten substituiert mit Vinyl, Glycidylether, einer kondensierten heterozyklischen aromatischen Verbindung, einem Glycidylester einer Benzoesäure substituiert mit einem Halogenatom, oder einem Glycidylester einer kondensierten aromatischen Carbonsäure.

8. Zusammensetzung gemäß Anspruch 7, dadurch gekennzeichnet, daß der Phenylglycidylether eine Phenylgruppe aufweist die mit einem Halogenatom substituiert ist und eine Verbindung ist ausgewählt aus 2-Chlorphenylglycidylether, 4-Chlorphenylglycidylether, 2, 4, 6-Trichlorphenylglycidylether, 2, 4-Dibromphenylglycidylether oder 2,4-Dibromcresylglycidylether.

9. Zusammensetzung gemäß Anspruch 7, dadurch gekennzeichnet, daß der Phenylglycidylether eine Phenylgruppe aufweist, die substituiert ist mit einem Substituenten, der eine aromatische Gruppe enthält und eine Verbindung ist ausgewählt aus 2-Phenylphenylglycidylether, 4-Phenylphenylglycidylether, 4-Benzylphenylglycidylether oder 4-Cumylphenylglycidylether.

10. Zusammensetzung gemäß Anspruch 7, dadurch gekennzeichnet, daß der Arylglycidylether, bei dem Aryl eine kondensierte aromatische Gruppe ist, 1-Naphtylglycidylether ist, 2-Naphthylglycidylether oder 9-Phenanthrylglycidylether.

11. Zusammensetzung gemäß Anspruch 7, dadurch gekennzeichnet, daß bei dem Arylglycidylether Aryl eine kondensierte aromatische Gruppe ist, die mit einem Halogenatom substituiert ist und der Arylglycidylether eine Verbindung ist ausgewählt aus 4-Chlor-1-Naphtyhlglycidylether, 2, 4-Dichlornaphthylglycidylether, 1-Brom-Naphthylglycidylether, 1-Brom-2-Naphthylglycidylether, 2-Brom-2-Naphtylglycidylether, 2-Brom-2-Naphtylglycidylether oder 1,6-Dibrom-2-Naphtylglycidylether.

12. Zusammensetzung gemäß Anspruch 7, dadurch gekennzeichnet, daß der Phenylglycidylthioether ein 4-Chlorphenyl-Glycidylthioether oder 2-Chlorphenylglycidylthioether ist.

13. Zusammensetzung gemäß Anspruch 7, dadurch gekennzeichnet, daß bei dem Styroloxid Phenyl substituiert ist mit einem Halogenatom und das Styroloxid ein 4-Chlorstyroloxid, 2-Chlorstyroloxid, 2,6-Dichlorstyroloxid oder 4-Bromstyroloxid ist.

14. Zusammensetzung gemäß Anspruch 7, dadurch gekennzeichnet, daß das Oxid einer kondensierten aromatischen Verbindung mit Vinyl substituiert ist und ein 2-Vinylnaphthalinoxid oder 9-Vinylphenanthrenoxid ist.

15. Zusammensetzung gemäß Anspruch 7, dadurch gekennzeichnet, daß der Glycidylether einer kondensierten heterozyklischen aromatischen Verbindung ein 4-(2,3-epoxypropoxy)indol ist.

16. Zusammensetzung gemäß Anspruch 7, dadurch gekennzeichnet, daß der Glycidylether einer Benzoesäure substituiert ist mit einem Halogenatom und daß dieser eine Verbindung ist aus ausgewählt aus Glycidyl-2-Chlorbenzoat, Glycidyl-3-Chlorbenzoat, Glycidyl-2,4-Dichlorbenzoat, Glycidyl-2,5-Dichlorbenzoat, Glycidyl-2-Brombenzoat oder Glycidyl-4-Brombenzoat.

17. Zusammensetzung gemäß Anspruch 7, dadurch gekennzeichnet, daß der Glycidylether einer kondensierten aromatischen Carbonsäure ein Gycidyl-1-Naphthoat oder Glycidyl-2-Naphthoat ist.

18. Zusammensetzung gemäß einem der vorhergehenden Ansprüche, dadurch gekennzeichnet, daß das Ethylenoxid-Copolymere umfaßt Ethylenoxid als ein erstes Monomeres und ein zweites Monomeres, das eine kondensierte heterozyklische aromatische Verbindung ist, die mit Glycidyl substituiert ist.

19. Zusammensetzung gemäß Anspruch 18, dadurch gekennzeichnet, daß die kondensierte heterozyklische aromatische Verbindung substituiert ist mit Glycidyl und daß diese Glycidylcarbazol ist, Glycidylindol oder Glycidylphenothiazin.

20. Zusammensetzung gemäß einem der vorhergehenden Ansprüche, dadurch gekennzeichnet, daß das Ethylenoxidcopolymere Ethylenoxid umfaßt, sowie das zweite Monomere und weiterhin ein drittes Monomeres.

21. Zusammensetzung gemäß Anspruch 20, dadurch gekennzeichnet, daß das dritte Monomere eine Verbindung ist, die ausgewählt ist aus Alkylenoxid, Cycloalkylepoxid, einem Aromaten substituierten Epoxid, einem halogen-substituierten Alkylenoxid, Alkylgycidylether, Alkenylglycidylether, aromatischem Glycidylether oder Glycidylester.

22. Zusammensetzung gemäß Anspruch 21, dadurch gekennzeichnet, daß das Alkylenoxid ein Proylenoxid oder 1-Butenoxid ist.

23. Zusammensetzung gemäß Anspruch 21, dadurch gekennzeichnet, daß das Cycloalkylepoxid ein Cyclohexenoxid oder Vinylcyclohexenmonoxide ist.

24. Zusammensetzung gemäß Anspruch 21, dadurch gekennzeichnet, daß das aromatensubstituierte Epoxid ein Styroloxid oder Alpha-Methylstyroloxid ist.

25. Zusammensetzung gemäß Anspruch 21, dadurch gekennzeichnet, daß das halogensubstituierte Alkylenoxid Epichlorhydrin oder Epibromhydrin ist.

26. Zusammensetzung gemäß Anspruch 21, dadurch gekennzeichnet, daß der Alkylglycidylether Ethylglycidylether ist, Butylglycidylether oder Chlorethylglycidylether.

27. Zusammensetzung nach Anspruch 21, dadurch gekennzeichnet, daß der Alkenylglycidylether ein Allylglycidylether ist.

28. Zusammensetzung gemäß Anspruch 21, dadurch gekennzeichnet, daß der aromatische Glycidylether ein Phenylglycidylether ist.

29. Zusammensetzung gemäß Anspruch 1, dadurch gekennzeichnet, daß der Glycidylester eine Verbindung ist die ausgewählt wird aus Glycidylacetat, Glycidylpropionat, Glycidylmethacrylat oder Glycidylbenzoat.

30. Zusammensetzung gemäß einem der vorhergehenden Ansprüche, dadurch gekennzeichnet, daß das Ethylenoxidcopolymere in einer Menge von 8 bis 25 Gewichtsteilen pro 100 Gewichtsteile des ABS-Propf-Copolymeren vorhanden ist.

31. Zusammensetzung gemäß einem der vorhergehenden Ansprüche, dadurch gekennzeichnet, daß das Ethylenoxidcopolymere (B) verwendet wird als Verschnitt mit Ethylenoxid Homopolymeren und/oder anderen Ethylenoxidcopolymeren, wobei der Anteil des Ethylenoxidcopolymeren (B) wenigstens 30 Gewichtsprozent auf Basis des Verschnitts beträgt.

32. Zusammensetzung gemäß einem der vorhergehenden Ansprüche, dadurch gekennzeichnet, daß das zweite Monomere eine Verbindung ist, die einen Brechungsindex (n_{D}²⁰) von wenigstens 1,55 aufweist.

33. Zusammensetzung gemäß einem der vorhergehenden Ansprüche, dadurch gekennzeichnet, daß das Molekulargewicht des Ethylenoxidcopolymeren 0,5 bis 10 beträgt ausgedrückt als reduzierte Viskosität die bei 80° C unter Verwendung von 0,1 g/dl der Monochlorbenzollösung gemessen wird.

## Revendications

1. Composition de résine antistatique ***caractérisée en ce que*** la composition comprend :
(A) 100 parties en poids d'un copolymère ABS greffé comprenant comme composants monomères un composé acrylonitrile et un composé vinylique aromatique selon un rapport pondéral de 10/90 à 50/50 ; et
(B) 5 à 30 parties en poids d'un copolymère d'oxyde d'éthylène mélangé avec le copolymère ABS greffé et contenant au moins 50 % en poids d'oxyde d'éthylène comme composant monomère, le copolymère d'oxyde d'éthylène ayant un indice de réfraction (n_{D}²⁰) d'au moins 1,50 ;
***en ce que*** le copolymère ABS greffé comprend au moins 40 % en poids de la combinaison du composé vinylique aromatique et du composé acrylonitrile, et jusqu'à 60 % en poids d'un substrat de caoutchouc ;
***en ce que*** le copolymère d'oxyde d'éthylène comprend l'oxyde d'éthylène comme premier monomère et un second monomère, ce second monomère étant un composé représenté par la formule générale 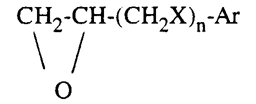 dans laquelle Ar est un groupement aromatique monocyclique ou un groupement aromatique hétérocyclique ayant un substituant choisi dans le groupe constitué par un atome d'halogène, un aryle, un aralkyle et une combinaison de ceux-ci, ou un groupement aromatique condensé ou un groupement aromatique hétérocyclique avec ou sans un substituant, n est un nombre entier 0 ou 1, et X est O (oxygène), S (soufre) ou un groupement -O-CO- ; et
***en ce que*** le second monomère est un composé ayant un indice de réfraction (n_{D}²⁰) d'au moins 1,54.

2. Composition selon la Revendication 1, ***caractérisée en ce que*** le rapport pondéral du composé acrylonitrile et du composé vinylique aromatique est compris entre 20/80 et 40/60.

3. Composition selon la Revendication 1 ou 2, ***caractérisée en ce que*** le composé acrylonitrile est un composé choisi parmi l'acrylonitrile, les acrylonitriles halogénés, le méthacrylonitrile ou l'éthacrylonitrile.

4. Composition selon la Revendication 1, 2 ou 3, ***caractérisée en ce*** *que* le composé vinylique aromatique est un composé choisi parmi les vinylanilines, le styrène, l'alpha-méthylstyrène, les styrènes halogénés ou les alkylstyrènes.

5. Composition selon l'une quelconque des Revendications précédentes, ***caractérisée en ce que*** le substrat de caoutchouc est un composé choisi parmi le caoutchouc butadiène, un copolymère du butadiène et de l'acrylonitrile, de l'alkylacrylate, de l'alkylméthacrylate ou d'un monomère vinylique aromatique, un caoutchouc acrylique dérivé d'un homopolymère ou d'un copolymère alkylacrylate, un caoutchouc copolymère éthylène-propylène diénique non-conjugué, ou un polyéthylène chloré semicristallin ou non cristallin.

6. Composition selon l'une quelconque des Revendications précédentes, ***caractérisée en ce que*** le copolymère ABS greffé est utilisé mélangé à un polymère choisi dans le groupe composé de : polymère de chlorure de vinyle, polymère de styrène, polymère de styrène résistant aux chocs, polymère de méthylméthacrylate, polyuréthane, polycarbonate, polyamide, polyester, polyphénylène éther, polyglutarimide et polyéthylène chloré, la proportion de copolymère ABS greffé étant d'au moins 30 % en poids basé sur le mélange.

7. Composition selon l'une quelconque des Revendications précédentes, ***caractérisée en ce que*** le second monomère est un composé choisi parmi un phényl-glycidyl éther à phényle substitué avec un atome d'halogène, un phényl-glycidyl éther dans lequel le phényle est substitué avec un substituant contenant un groupement aromatique, un aryl-glycidyl éther dans lequel l'aryle est un groupement aromatique condensé, un aryl-glycidyl éther dans lequel l'aryle est un groupement aromatique condensé substitué avec un atome d'halogène, un phényl-glycidyl-thioéther, un oxyde de styrène dans lequel le phényle est substitué avec un atome d'halogène, un époxyde d'un composé aromatique condensé susbtitué avec un vinyle, un glycidyl éther d'un composé hétérocyclique aromatique condensé, un glycidyl ester d'un acide benzoïque substitué avec un atome d'halogène, ou un glycidylester d'un acide carboxylique aromatique condensé.

8. Composition selon la Revendication 7, ***caractérisée en ce que*** le phényl-glycidyl éther à phényle substitué avec un atome d'halogène est un composé choisi parmi : 2-chlorophényl-glycidyl éther, 4-chlorophényl-glycidyl éther, 2,4,6-trichlorophényl-glycidyl éther, 2,4-dibromophényl-glycidyl éther ou 2,4-dibromocrésyl-glycidyl éther.

9. Composition selon la Revendication 7, ***caractérisée en ce que*** le phényl-glycidyl éther dans lequel le phényle est substitué avec un substituant contenant un groupement aromatique est un composé choisi parmi : 2-phénylphényl-glycidyl éther, 4-phénylphényl-glycidyl éther, 4-benzyl-phényl-glycidyl éther ou 4-cumylphényl-glycidyl éther.

10. Composition selon la Revendication 7, ***caractérisée en ce que*** l'aryl-glycidyl éther dans lequel l'aryle est un groupement aromatique condensé est le 1-naphtyl-glycidyl éther, le 2-naphtyl-glycidyl éther ou le 9-phénanthryl-glycidyl éther.

11. Composition selon la Revendication 7, ***caractérisée en ce que*** l'aryl-glycidyl éther dans lequel l'aryle est un groupement aromatique condensé substitué avec un atome d'halogène est un composé choisi parmi le 4-chloro-1-naphtyl-glycidyl éther, le 2,4-dichloro-1-naphtylglycidyl éther, le 1-bromo-2-naphtyl-glycidyl éther, le 2-bromo-2-naphtyl-glycidyl éther ou le 1,6-dibromo-2-naphtyl-glycidyl éther.

12. Composition selon la Revendication 7, ***caractérisée en ce que*** le phényl-glycidyl thioéther est le 4-chlorophényl glycidyl thioéther ou le 2-chlorophényl-glycidyl thioéther.

13. Composition selon la Revendication 7, ***caractérisée en ce que*** l'oxyde de styrène dans lequel le phényle est substitué avec un atome d'halogène est l'oxyde de 4-chlorostyrène, l'oxyde de 2-chlorostyrène, l'oxyde de 2,6-dichlorostyrène ou l'oxyde de 4-bromostyrène.

14. Composition selon la Revendication 7, ***caractérisée en ce que*** l'oxyde d'un composé aromatique condensé substitué avec le vinyle est l'oxyde de 2-vinylnaphtalène ou l'oxyde de 9-vinylphénanthrène.

15. Composition selon la Revendication 7, ***caractérisée en ce que*** le glycidyl éther d'un composé hétérocyclique aromatique condensé est le 4-(2,3-époxypropoxy)-indole.

16. Composition selon la Revendication 7, ***caractérisée en ce que*** le glycidyl ester d'un acide benzoïque substitué avec un atome d'halogène est un composé choisi parmi le glycidyl-2-chlorobenzoate, le glycidyl-3-chlorobenzoate, le glycidyl-2,4-dichlorobenzoate, le glycidyl-2,5-dichlorobenzoate, le glycidyl-2-bromobenzoate ou le glycidyl4-bromobenzoate.

17. Composition selon la Revendication 7, ***caractérisée en ce que*** le glycidyl ester d'un acide carboxylique aromatique condensé est le glycidyl-1-naphtoate ou le glycidyl-2-naphtoate.

18. Composition selon l'une quelconque des Revendications précédentes, ***caractérisée en ce que*** le copolymère d'oxyde d'éthylène comprend l'oxyde d'éthylène comme premier monomère et un second monomère qui est un composé hétérocyclique aromatique condensé substitué avec le glycidyle.

19. Composition selon la Revendication 18, ***caractérisée en ce que*** le composé hétérocyclique aromatique condensé substitué avec le glycidyle est le glycidylcarbazole, le glycidylindole ou la glycidylphénothiazine.

20. Composition selon l'une quelconque des Revendications précédentes, ***caractérisée en ce que*** le copolymère d'oxyde d'éthylène comprend l'oxyde d'éthylène, le second monomère et de plus un troisième monomère.

21. Composition selon la Revendication 20, ***caractérisée en ce que*** le troisième monomère est un composé choisi parmi un : oxyde d'alkylène, cycloalkyl époxyde, époxyde aromatique substitué, oxyde d'alkylène substitué avec un halogène, alkyl-glycidyl éther, alkényl-glycidyl éther, glycidyl éther aromatique ou glycidyl ester.

22. Composition selon la Revendication 21, ***caractérisée en ce que*** l'oxyde d'alkylène est l'oxyde de propylène ou l'oxyde de 1-butène.

23. Composition selon la Revendication 21, ***caractérisée en ce que*** le cycloalkyl époxyde est l'oxyde de cyclohexène ou le monoxyde de vinylcyclohexène.

24. Composition selon la Revendication 21, ***caractérisée en ce que*** l'époxyde aromatique substitué est l'oxyde de styrène ou l'oxyde d'alpha-méthylstyrène.

25. Composition selon la Revendication 21, ***caractérisée en ce que*** l'oxyde d'alkylène substitué avec un halogène est l'épichlorhydrine ou l'épibromhydrine.

26. Composition selon la Revendication 21, ***caractérisée en ce que*** l'alkyl-glycidyl éther est l'éthyl-glycidyl éther, le butyl-glycidyl éther ou le chloréthyl-glycidyl éther.

27. Composition selon la Revendication 21, ***caractérisée en ce que*** l'alkényl-glycidyl éther est l'allyl-glycidyl éther.

28. Composition selon la Revendication 21, ***caractérisée en ce que*** le glycidyl éther aromatique est le phényl-glycidyl éther.

29. Composition selon la Revendication 1, ***caractérisée en ce que*** le glycidyl ester est un composé choisi parmi acétate de glycidyle, propionate de glycidyle, méthacrylate de glycidyle ou benzoate de glycidyle.

30. Composition selon l'une quelconque des Revendications précédentes, ***caractérisée en ce que*** le copolymère d'oxyde d'éthylène est présent selon une quantité de 8 à 25 parties en poids pour 100 parties en poids du copolymère ABS greffé.

31. Composition selon l'une quelconque des Revendications précédentes, ***caractérisée en ce que*** le copolymère d'oxyde d'éthylène (B) est utilisé mélangé à l'homopolymère d'oxyde d'éthylène et/ou à un autre copolymère d'oxyde d'éthylène, la proportion du copolymère d'oxyde d'éthylène (B) étant d'au moins 30 % en poids basé sur le mélange.

32. Composition selon l'une quelconque des Revendications précédentes, ***caractérisée en ce que*** le second monomère est un composé ayant un indice de réfraction (n_{D}²⁰) d'au moins 1,55.

33. Composition selon l'une quelconque des Revendications précédentes, ***caractérisée en ce que*** le poids moléculaire du copolymère d'oxyde d'éthylène est de 0,5 à 10 en termes de viscosité réduite telle que mesurée à 80°C en utilisant une solution de monochlorobenzène de celui-ci à 0,1 g/dl.
